# FASCICULE DE BREVET EUROPEEN

(11) **EP 2 537 410 B1**
(45) Date de publication et mention de la délivrance du brevet: **09.08.2017**
(21) Numéro de dépôt: 12171394.5
(22) Date de dépôt: 08.06.2012
(51) Int. Cl.: A01F 29/01, B27L 11/00, A01B 73/00

(54) **Broyeur de végétaux déporté**
Versetzter Häcksler für Pflanzen
Offset plant grinder

(30) Priorité: 24.06.2011 FR 1155652
(43) Date de publication de la demande: 26.12.2012
(73) Titulaire: Bugnot, Michel, 52270 Bettaincourt sur Rognon (FR)
(72) Inventeur: Bugnot, Michel, 52270 Bettaincourt sur Rognon (FR)
(74) Mandataire: Lavialle, Bruno François Stéphane

(56) Documents cités:
- EP-A1- 1 161 998
- DE-A1- 1 480 226
- FR-A1- 2 469 099
- FR-A3- 2 685 246
- US-A1- 2007 284 851

## Description

La présente invention concerne un broyeur de végétaux mobile destiné à transformer sur les lieux de leur séjour, les végétaux à broyer en particules de petite taille pour toute utilisation ultérieure.

Le document EP 1 161 998 décrit un broyeur à végétaux monté coaxialement avec l'axe du tracteur et dont l'unité de broyage se situe à l'extrémité du châssis opposée aux moyens d'attelage.

### ARRIERE PLAN DE L'INTENTION

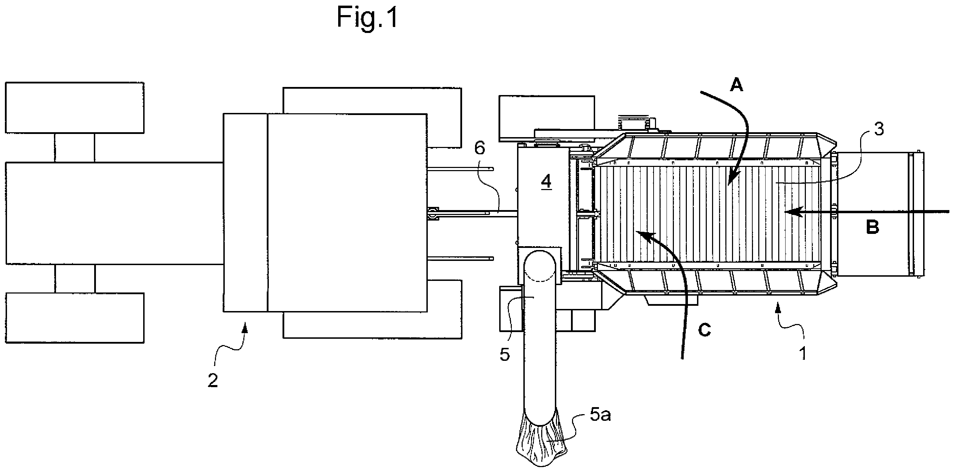

La figure 1 illustre schématiquement un broyeur de végétaux selon l'état de la technique. Le broyeur 1 est attelé à l'arrière d'un tracteur 2. Le matériau à broyer est fourni à l'unité de broyage 4 qui comprend un tambour rotatif avec des coutils périphériques de coupe ou de déchiquetage, par un tapis d'amenée 3 formant le fond d'une trémie que l'on peut charger par trois de ses côtés comme indiqué par les flèches A, B et C.

Le broyat 5a est extrait de l'appareil par tout moyen mécanique ou pneumatique symbolisé par une goulotte 5 qui permet par exemple, de remplir une remorque qui est adjacente au tracteur et au broyeur.

Un des inconvénients de ce type d'appareil réside dans la nécessaire reprise des particules végétales broyées pour les déverser sur le côté.

Il existe d'autres appareils qui sont placés à l'arrière d'un véhicule tracteur et dans lesquels le tapis d'amenée s'étend entre le tracteur et l'unité de broyage, de sorte que le produit issu du broyage est délivré à l'arrière de l'attelage et peut retomber sans gêne sur le sol ou il peut constituer un tas ou un andin. Ces appareils sont d'un usage avantageux quand le produit du broyage reste sur place car ils ne comportent pas de moyen de reprise du broyat. Le chargement du tapis d'amenée est alors réalisé latéralement, soit manuellement soit au moyen d'un bras de préhension, le matériau à broyer ayant été préalablement rassemblé en tas longilignes le long desquels le tracteur avance.

Un des inconvénients de ce type d'engins réside dans la limite qui est imposée à la longueur du matériau à broyer par la distance qui sépare le tracteur de l'unité de broyage proprement dite. Par ailleurs, les éventuelles projections de particules par le rotor de broyage, sont dirigée vers le tracteur et peuvent présenter un danger pour son conducteur.

L'invention a pour but d'allier les avantages des deux types de broyeurs tractés.

### OBJET DE L'INVENTION

C'est ainsi que l'invention a pour objet un broyeur de végétaux comportant:
- un châssis pourvu d'organes de roulement sur le sol et, à l'une de ses extrémités, de moyens d'attelage à un véhicule tracteur et définissant une structure de support pour
- une unité de broyage placée sur le châssis au voisinage de l'extrémité du châssis opposée aux moyens d'attelage, dans laquelle un tambour de travail est relié par une transmission à un moteur d'entraînement,
- et une trémie d'enfournement portée par le châssis à l'avant de l'unité de broyage dans le sens de l'enfournement et comportant un fond mobile formant tapis d'amenée du produit à broyer dans l'unité de broyage,
dans lequel les moyens d'attelage comprennent un timon relié au châssis, d'une part par articulation d'une de ses extrémités autour d'un axe sensiblement vertical et d'autre part, au moyen d'un bras extensible s'étendant sentre le châssis et une partie centrale du timon de sorte que les articulations entre le châssis, le timon et le bras sont aux sommets d'un triangle déformable entre un premier état dans lequel l'effort de traction, imprimé par le tracteur au broyeur, passe sensiblement par l'axe longitudinal du châssis et un second état dans lequel l'effort de traction est latéralement décalé par rapport à cet axe longitudinal.

Dans le premier état de configuration du triangle, le broyeur est situé derrière le tracteur; il s'agit de sa position de transport.

Dans le second état de configuration du triangle, le broyeur est déporté latéralement par rapport à l'axe du tracteur de sorte que l'extrémité libre du tapis d'alimentation soit écartée de l'arrière du tracteur et puisse admettre des pièces à déchiqueter longues c'est-à-dire plus longues que la distance séparant l'entrée du broyeur de l'arrière du tracteur dans le premier état susdit.

Le bras extensible est un vérin et le passage du premier état au second état est obtenu par extension du vérin susdit.

Les organes de roulement comprennent une roue avant montée folle autour d'un pivot vertical du châssis. Cette roue donne au broyeur la possibilité d'être dételé du tracteur tout en restant stable.

Dans un mode de réalisation, le timon constitue au moins partiellement un carter de protection pour une ligne de transmission de mouvement depuis la prise de force du tracteur jusqu'à l'entrée d'un boîtier de renvoi d'angle latéral porté par le châssis, dont la sortie est équipée d'une poulie pour une courroie d'entraînement de l'unité de broyage.

Une autre version du broyeur consiste à l'équiper de son propre moteur, par exemple un moteur thermique, porté par le châssis dont la sortie est accouplée au tambour de l'unité de broyage. Le timon n'est plus alors, associé au vérin, qu'un moyen d'attelage du châssis au tracteur.

D'autres caractéristiques et avantages de l'invention ressortiront de la description donnée ci-après d'un exemple de réalisation de l'invention.

### BREVE DESCRIPTION DES DESSINS

Il sera fait référence aux dessins annexés dans lesquels :
- la figure 1 illustre un broyeur de végétaux selon l'état de la technique,
- la figure 2 est une vue de dessus d'un ensemble tracteur-broyeur selon l'invention dans son premier état,
- la figure 3 illustre par une vue partielle de côté l'attelage entre le châssis et le tracteur,
- la figure 4 est une vue de dessus du tracteur et du châssis seul du broyeur dans son second état.

### DESCRIPTION DETAILLEE DE L'INVENTION

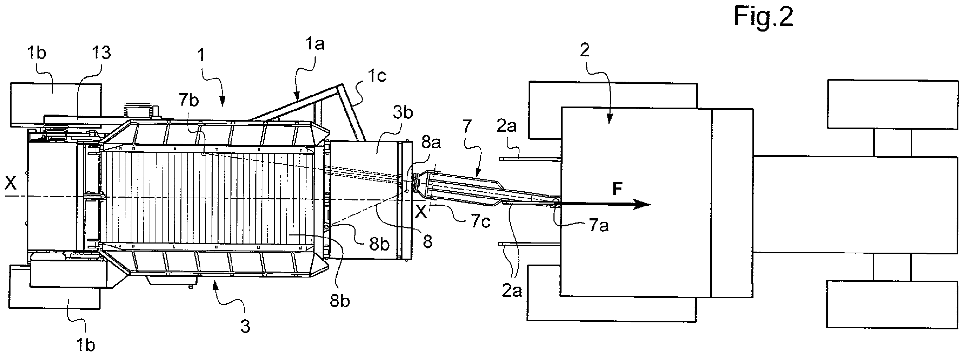

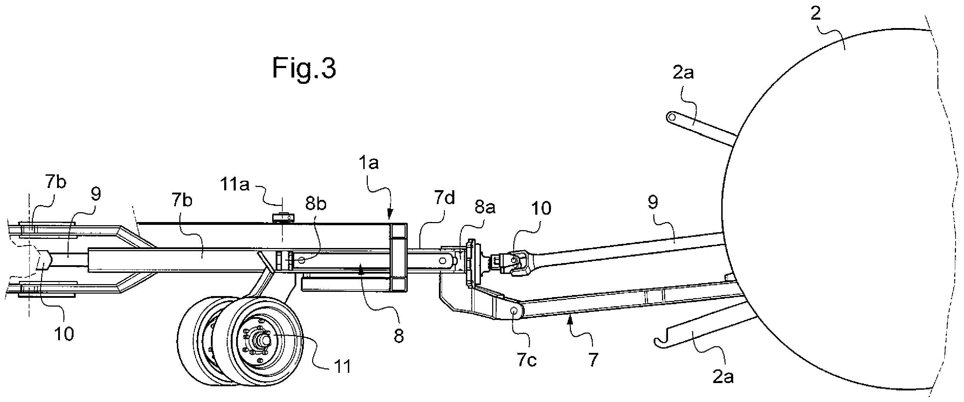

L'invention sera décrite en regard des figures 2 à 4. On y retrouve un broyeur 1 attelé à un tracteur 2 pourvu d'un système de relevage 2a sur lequel peut être installé un bras de manutention non représenté. Le broyeur comporte au fond d'une trémie d'enfournement 3 un tapis mobile 3a d'amenée du produit à traiter au tambour de la machine 4 de déchiquetage. A l'opposé du tambour, le broyeur comporte un plateau 3b qui prolonge le tapis par un support du produit si sa longueur excède celle du tapis.

Le broyeur est porté par un châssis la d'axe médian longitudinal XX, lequel est pourvu d'un essieu arrière 1b. Un timon d'attelage 7 permet d'accrocher le châssis derrière le tracteur. Ce timon peut pivoter par rapport au châssis 1 autour d'un axe vertical 7b et par rapport au tracteur 2 autour d'un axe vertical 7a. On aura noté que l'axe 7b est porté par le châssis au voisinage du milieu d'un de ses bords latéraux.

Entre les deux pivots 7a et 7b, le timon passe entre deux guides 1c, solidaires du châssis, de sorte que l'axe du pivot 7b ne soit pas sollicité en flexion. Pour tenir compte des irrégularités de terrain, le timon possède une articulation 7c d'axe horizontal. En d'autres termes, le châssis et le tracteur sont reliés par un attelage qui jouit des mêmes degrés de liberté qu'un cardan.

Un vérin 8 s'étend entre le timon 7 et le châssis la Son corps est articulé à ce châssis autour d'un axe 8b tandis que sa tige est articulée au timon autour d'un axe 8a implanté dans un gousset latéral du timon situé sensiblement au milieu de sa longueur. Les articulations 7b, 8b et 8a forment les sommets d'un triangle déformable dont le côté 8 est extensible ou du moins peut adopter deux longueurs différentes.

Par construction, lorsque le vérin 8 est contracté, l'attelage est dans sa configuration de la figure 2, c'est-à-dire que la force de traction F appliquée par le tracteur sur le broyeur est sensiblement coaxiale à l'axe médian longitudinal XX du châssis du broyeur.

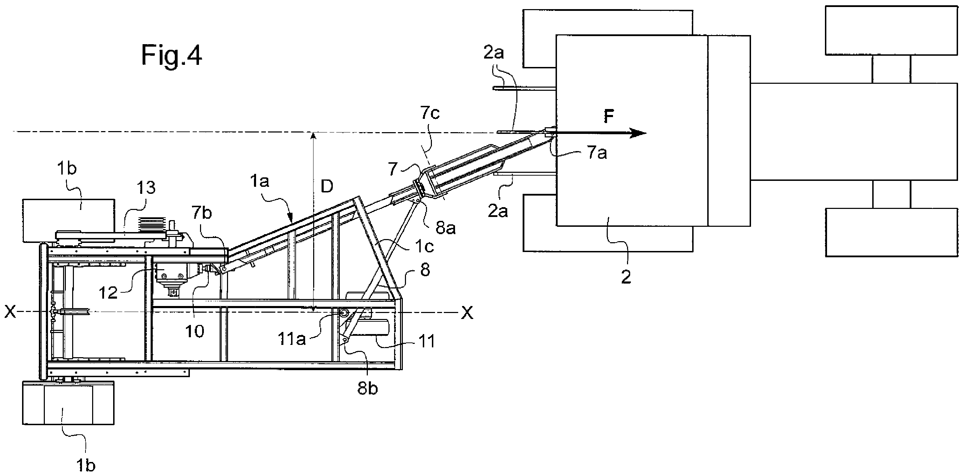

Lorsque le vérin est étendu, l'attelage adopte la configuration de la figure 4, c'est-à-dire que la force de traction F est décalée d'une valeur D par rapport à cet axe XX. Dans ces conditions, le broyeur est latéralement déporté par rapport au tracteur et dans cet état, le broyeur peut accepter des pièces de grande longueur. Le produit du broyage retombe sur le sol à l'arrière du broyeur sans qu'il soit nécessaire de le reprendre pour l'extraire de la machine.

Le châssis la du broyeur est équipé, du côté de son extrémité d'attelage, d'une roue 11, ici roue jumelée, librement pivotante autour d'un axe vertical 11a, qui fait du broyeur un outil traîné derrière le tracteur. Ce ne serait pas sortir du cadre de l'invention que de prévoir un broyeur semi porté avec un timon sans charnière horizontale et à la place de la roue avant, une béquille escamotable pour soutenir le broyeur lorsqu'il est dételé ou en posaition déportée.

Dans le mode de réalisation représenté, l'entraînement du broyeur est assuré par une ligne de transmission 9, avec des joints de Cardan 10 s'étendant depuis la prise de force (non représentée) du tracteur 2 jusqu'à un boîtier 12 de renvoi d'angle, porté par le châssis et pourvu d'une poulie pour une courroie 13 de transmission et d'entraînement du tambour de l'unité de broyage 4. On notera que le timon 7 est en forme de tube dans sa partie 7d située entre la charnière 7c et le pivot 7b, qui constitue un carter de protection de l'arbre tournant de la ligne situé entre les deux joints de Cardan 10.

L'invention concerne aussi une réalisation dans laquelle l'entraînement de ce tambour est assuré par un moteur indépendant porté par le châssis.

## Revendications

1. Broyeur (1) de végétaux comportant:
- un châssis (1a) pourvu d'organes de roulement (1b,11) sur le sol et, à l'une de ses extrémités, de moyens d'attelage (7) à un véhicule tracteur (2) et définissant une structure de support pour
- une unité de broyage (4) placée sur le châssis (1a) au voisinage de l'extrémité du châssis opposée aux moyens d'attelage (7), dans laquelle un tambour de travail est relié par une transmission (13) à un moteur d'entraînement,
- et une trémie (3) d'enfournement portée par le châssis à l'avant de l'unité de broyage dans le sens de l'enfournement et comportant un fond mobile formant tapis (3a) d'amenée du produit à broyer dans l'unité de broyage (4),
**caractérisé en ce que** les moyens d'attelage comprennent un timon (7) relié au châssis (1a) par articulation (7b) d'une de ses extrémités autour d'un axe sensiblement vertical et par un bras extensible (8) articulé à et s'étendant entre le châssis (1a) et une partie centrale du timon (7) de sorte que les articulations entre le châssis (1a), le timon (7) et le bras (8) sont aux sommets d'un triangle déformable entre un premier état dans lequel l'effort de traction (F), imprimé au tracteur au broyeur, passe sensiblement par l'axe longitudinal (XX) du châssis et un second état dans lequel l'effort (F) de traction est latéralement décalé (D) par rapport à cet axe longitudinal (XX).

2. Broyeur selon la revendication 1, **caractérisé en ce que** le bras extensible est un vérin (8), le passage du premier état au second état étant obtenu par extension du vérin susdit.

3. Broyeur selon la revendication 1 ou la revendication 2, **caractérisé en ce que** les organes de roulement comprennent une roue avant (11) montée à pivotement libre autour d'un pivot (11a) vertical du châssis.

4. Broyeur selon l'une des revendications précédentes, **caractérisé en ce que** le timon (7) constitue un carter de protection pour une ligne (9) de transmission de mouvement depuis la prise de force du tracteur (2) jusqu'à l'entrée d'un boîtier (12) de renvoi d'angle latéral porté par le châssis (1a), dont la sortie est équipée d'une poulie pour une courroie (13) d'entraînement de l'unité de broyage (4) .

## Patentansprüche

1. Pflanzenhäcksler (1), umfassend:
- ein Gestell (1a), das mit Rollelementen (1b, 11) zum Rollen auf dem Boden und an einem seiner Enden mit Kupplungsmitteln (7) zur Kupplung an ein Zugfahrzeug (2) versehen ist und eine Trägerstruktur definiert für
- eine Zerkleinerungseinheit (4), die auf dem Gestell (1a) nahe dem Ende des Gestells angeordnet ist, das den Kupplungsmitteln (7) entgegengesetzt ist, und in der eine Arbeitstrommel über ein Getriebe (13) mit einem Antriebsmotor verbunden ist,
- einen Beschickungstrichter (3), der von dem Gestell in Beschickungsrichtung am Vorderende der Zerkleinerungseinheit getragen wird und einen beweglichen Boden umfasst, der ein Zuführband (3a) zum Zuführen des zu häckselnden Produktes in die Zerkleinerungseinheit (4) bildet,
**dadurch gekennzeichnet, dass** die Kupplungsmittel eine Deichsel (7) umfassen, die mit dem Gestell (1a) über eine Gelenkverbindung (7b) eines ihrer Enden um eine im Wesentlichen vertikale Achse verbunden ist, sowie über einen ausfahrbaren Arm (8), der an dem Gestell (1a) angelenkt ist und sich zwischen dem Gestell (1a) und einem Mittelstück der Deichsel (7) erstreckt, derart, dass sich die Gelenkverbindungen zwischen dem Gestell (1a), der Deichsel (7) und dem Arm (8) in den Ecken eines Dreiecks befinden, das zwischen einem ersten Zustand, in dem die Zugkraft (F), die auf das Zugfahrzeug auf den Häcksler aufgebracht wird, im Wesentlichen durch die Längsachse (XX) des Gestells verläuft, und einem zweiten Zustand verformbar ist, in dem die Zugkraft (F) in Bezug auf diese Längsachse (XX) seitlich versetzt (D) ist.

2. Häcksler nach Anspruch 1, **dadurch gekennzeichnet, dass** der ausfahrbare Arm ein Zylinder (8) ist, wobei der Übergang vom ersten Zustand in den zweiten Zustand durch Ausfahren des oben genannten Zylinders erreicht wird.

3. Häcksler nach Anspruch 1 oder Anspruch 2, **dadurch gekennzeichnet, dass** die Rollelemente ein Vorderrad (11) umfassen, das um einen vertikalen Drehzapfen (11a) des Gestells frei schwenkbar gelagert ist.

4. Häcksler nach einem der vorhergehenden Ansprüche, **dadurch gekennzeichnet, dass** die Deichsel (7) ein Schutzgehäuse für eine Bewegungsübertragungsleitung (9) von der Zapfwelle des Zugfahrzeugs (2) bis zum Eingang eines von dem Gestell (1a) getragenen seitlichen Winkeltriebgehäuses (12) bildet, dessen Ausgang mit einer Riemenscheibe für einen Antriebsriemen (13) zum Antrieb der Zerkleinerungseinheit (4) ausgestattet ist.

## Claims

1. A plant matter grinder (1) comprising:
· a chassis (1a) having wheel means (1b), 11) for running on the ground and, at one of its ends, coupling means (7) for coupling to a tractor vehicle (2) and defining a support structure for:
· a grinder unit (4) placed on the chassis (1a) in the vicinity of the end of the chassis remote from the coupling means (7), in which a working drum is connected by a transmission (13) to a drive motor; and
· a feed hopper (3) carried by the chassis in front of the grinder unit in the feed direction and including a movable bottom forming a belt (3a) for conveying the matter for grinding into the grinder unit (4) ;
the grinder being **characterized in that** the coupling means comprise a drawbar (7) connected to the chassis (1a) by hinging (7b) one of its ends about a substantially vertical axis and by an extendable arm (8) hinged to and extending between the chassis (1a) and a central portion of the drawbar (7) so that the hinges between the chassis (1a), the drawbar (7), and the arm (8) are at the vertices of a triangle that is deformable between a first state in which the traction force (F) imparted by the tractor to the grinder passes substantially via the longitudinal axis (XX) of the chassis, and a second state in which the traction force (F) is offset laterally (D) relative to said longitudinal axis (XX).

2. A grinder according to claim 1, **characterized in that** the extendable arm is an actuator (8), with passage from the first state to the second state being obtained by extending said actuator.

3. A grinder according to claim 1 or claim 2, **characterized in that** the wheel means comprise a front wheel (11) mounted to pivot freely about a vertical pivot (11a) of the chassis.

4. A grinder according to any preceding claim, **characterized in that** the drawbar (7) constitutes a protective casing for a line (9) for transmitting drive from the power takeoff of the tractor (2) to the inlet of a housing (12) of a lateral angle transmission carried by the chassis (1a), having its outlet fitted with a pulley for a belt (13) for driving the grinder unit (4).
